# EUROPÄISCHE PATENTANMELDUNG

(11) **EP 1 091 135 A2**
(43) Veröffentlichungstag der Anmeldung: **11.04.2001**
(21) Anmeldenummer: 00121955.9
(22) Anmeldetag: 09.10.2000
(51) Int. Cl.: F16B 39/10

(54) **Unterlegscheibe**

(30) Priorität: 08.10.1999 DE 19948868
(71) Anmelder: TEXTRON VERBINDUNGSTECHNIK GmbH & Co. OHG, 56567 Neuwied (DE)
(72) Erfinder: Diener, Frank-Uwe, 78532 Tuttlingen (DE)
(74) Vertreter: Mahler, Peter, Dipl.-Phys.

(57) **Zusammenfassung**

Die Erfindung betrifft eine Unterlegscheibe (1) zur Befestigung an einem Befestigungselement (2), insbesondere an einer Mutter oder an einem Schraubbolzen, die dadurch gekennzeichnet ist, daß sie mit mindestens zwei angeformten Haltekrallen (3) versehen ist, die um einen am Befestigungselement (2) angeordneten Flansch (4) umlegbar sind.

## Beschreibung

Die Erfindung betrifft eine Unterlegscheibe zur Befestigung an einem Befestigungselement.

Aus der DE-GM 94 00 671 ist eine Außenscheibenbundmutter bekannt, an der eine Unterlegscheibe unverlierbar befestigt ist. Der Mutternkörper weist einen Außenflansch auf, der von einem an der Unterlegscheibe angeformten Ringsteg umfaßt wird. Die Unterlegscheibe ist damit zwar drehbar, aber unlösbar mit der Scheibe verbunden.

Diese sogenannten Scheibenmuttern sind aufwendig zu fertigen, da eine Verformung des vollständigen Scheibenaußenumfangs notwendig ist. Außerdem treten Nachteile auf, wenn Scheibe und Mutter beschichtet oder gewachst werden sollen, da sich überschüssiges Beschichtungsmedium im Bereich des Ringstegs sammelt und nicht abfließen kann.

Es ist Aufgabe der Erfindung, eine Unterlegscheibe zu schaffen, die unverlierbar an einem Befestigungselement befestigt werden kann und einfach herzustellen und zu befestigen ist.

Erfindungsgemäß wird diese Aufgabe durch eine Unterlegscheibe zur Befestigung an einem Befestigungselement, insbesondere an einer Mutter oder einem Schraubbolzen, gelöst, die dadurch gekennzeichnet ist, daß die Unterlegscheibe mit mindestens zwei angeformten Haltekrallen versehen ist, die um einen am Befestigungselement angeordneten Flansch umlegbar sind.

Die erfindungsgemäße Unterlegscheibe weist mindestens zwei, vorzugsweise drei oder auch mehr Haltekrallen auf, die sich im wesentlichen radial nach außen erstrecken. Die Haltekrallen sind so verformbar, daß sie zur Befestigung der Unterlegscheibe am Befestigungselement um einen am Befestigungselement angeordneten Flansch umlegbar sind.

Die erfindungsgemäße Scheibe ist leicht herstellbar, da eine Ausstanzung der Scheibe einschließlich Haltekrallen möglich ist. Die Haltekrallen können dann einfach um den Flansch des Befestigungselementes herumgelegt werden. Eine komplizierte Aufformung eines Ringstegs ist nicht mehr notwendig. Falls erforderlich kann die am Befestigungselement befestigte Unterlegscheibe leicht durch Aufbiegen der Haltekrallen entfernt werden.

Ein weiterer entscheidender Vorteil der erfindungsgemäßen Unterlegscheibe mit Haltekrallen ist, daß beim Beschichten des Befestigungselements und der Scheibe mit Lacken, Ölen oder Wachsen und anschließendem Abschleudern des Beschichtungsmediums das überschüssige Medium besser abläuft. Anhäufungen des Beschichtungsmediums werden verhindert.

Mit dem Befestigungselement, das insbesondere eine Mutter oder ein Schraubbolzen sein kann, läßt sich ein Bauteil durch Verschraubung befestigen. Die unverlierbar am Befestigungselement durch die Haltekrallen angebrachte Unterlegscheibe gerät dabei im Laufe des Schraubvorganges in Anlage zu einer Gegenfläche am Bauteil. Die Unterlegscheibe ist dabei durch die Haltekrallen so am Befestigungselement gesichert, daß sie sich je nach Reibwert zwischen Befestigungselement und Unterlegscheibe, bzw. Gegenfläche und Unterlegscheibe auch gegen das Befestigungselement verdrehen kann.

Die Haltekrallen sind vorzugsweise am äußeren Rand der Unterlegscheibe angeformt.

Der Biegebereich der Haltekrallen kann aber auch innerhalb des Scheibenradius liegen, so daß sich die Unterlegscheibe zumindest in Teilbereichen über den Außenradius des Befestigungselements, also des Mutternkörpers oder des Bolzenkopfes, erstreckt. Dadurch wird erreicht, daß das vom Befestigungselement auf die Scheibe übertragene Drehmoment bei Anlage der Scheibe an die Gegenfläche zu gering ist, als daß die Scheibe vom Befestigungselement mitgedreht werden könnte. Eine Beschädigung der Anlagefläche der Scheibe an einem Bauteil, das mit dem Befestigungselement befestigt wird, wird damit verhindert.

Um den Reibwert zwischen Scheibe und Anlagefläche am Bauteil zu erhöhen, kann es vorteilhaft sein, Ausklinkungen innerhalb der Unterlegscheibe vorzusehen. Diese Ausklinkungen ragen in Richtung der Anlagefläche nach unten aus der Unterlegscheibe heraus. Gerät die Scheibe in Anlage mit der Gegenfläche, bleibt die Scheibe auch bei Anlageflächen mit geringem Reibbeiwert stehen. Bei weiterem Anziehen des Befestigungselements dreht sich das Befestigungselement gegenüber der Scheibe. Die Ausklinkungen sind federnd und planieren sich mit wachsender Vorspannkraft. Es steht dem Befestigungselement die komplette Anlagefläche der Scheibe zur Verfügung.

Die Ausklinkungen sind vorzugsweise am inneren und/oder am äußeren Umfang der Scheibe angeordnet. Die Ausklinkungen können insbesondere rechteckig oder sägezahnförmig sein.

Zusätzlich oder ersatzweise können Ausstanzungen innerhalb der Scheibe vorgesehen sein. Die Ausstanzungen können vor den Ausklinkungen angeordnet sein. Es können aber auch insbesondere kreisförmige oder ovale Ausstanzungen im Scheibeninneren vorgesehen sein. Durch sich bei der Ausstanzung aufformende Grate der Ausstanzung wird ein ähnlicher Effekt erzielt wie mit den Ausklinkungen.

Die Erfindung wird im folgenden näher anhand der beigefügten Abbildungen erläutert:
- **Fig. 1**: zeigt eine erfindungsgemäße Unterlegscheibe mit Haltekrallen in Draufsicht;
- **Fig. 2**: zeigt eine erfindungsgemäße Unterlegscheibe, die an einem Schraubbolzen befestigt ist, im Schnitt;
- **Fig. 3**: zeigt eine erfindungsgemäße Unterlegscheibe, die an einer Schraubmutter befestigt ist, im Schnitt;
- **Fig. 4**: zeigt eine erfindungsgemäße Unterlegscheibe mit Haltekrallen und Ausklinkungen in Draufsicht;
- **Fig. 5**: zeigt eine erfindungsgemäße Unterlegscheibe mit Haltekrallen, Ausklinkungen und Ausstanzungen in Draufsicht;
- **Fig. 6**: zeigt eine erfindungsgemäße Unterlegscheibe mit Haltekrallen, sägezahnförmigen Ausklinkungen und Ausstanzungen in Draufsicht;
- **Fig. 7**: zeigt eine erfindungsgemäße Unterlegscheibe mit Haltekrallen und kreisförmigen Ausstanzungen in Draufsicht.

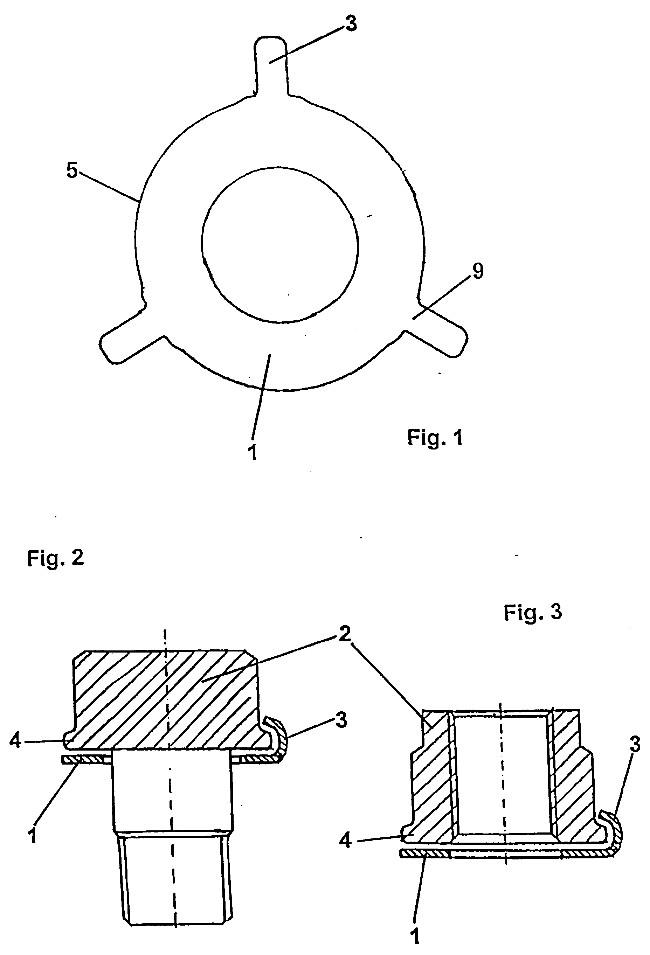

Die in **Fig. 1** abgebildete Unterlegscheibe **1** weist im wesentlichen den Durchmesser eines am zugehörigen Befestigungselement **2** angeordneten Flansches **4** auf. Die Unterlegscheibe **1** verfügt über am äußeren Rand angeformte Haltekrallen **3**, die so verformbar sind, daß sie um den Flansch **4** am Befestigungselement **2** umgelegt werden können.

**Fig. 2** zeigt einen Schraubbolzen **2**, der über einen umlaufenden Ringflansch **4** verfügt. Die Unterlegscheibe **1** läßt sich so am Schraubbolzen **2** befestigen, daß die Haltekrallen **3** um den Flansch **4** herumgelegt werden können. Die Unterlegscheibe **1** ist damit unverlierbar, aber drehbar mit dem Schraubbolzen **2** verbunden.

**Fig. 3** zeigt den entsprechenden Schnitt durch eine Schraubmutter **2** mit Ringflansch **4**.

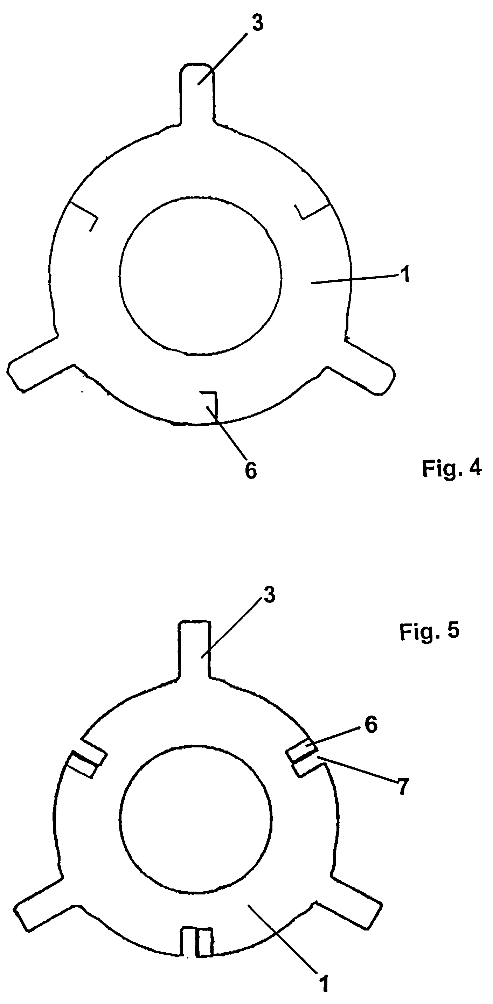

In **Fig. 4** ist eine Unterlegscheibe **1** dargestellt, die zusätzlich über Ausklinkungen **6** verfügt, die im äußeren Randbereich der Scheibe **1** angeordnet sind. Die Ausklinkungen **6** sind leicht federnd in Richtung der Anlagefläche der Scheibe mit dem zu befestigenden Bauteil gebogen. Ist die Unterlegscheibe **1** am zugehörigen Befestigungselement befestigt, und wird mit diesem ein Bauteil befestigt, so sorgen die in Richtung der Anlagefläche weisenden Ausklinkungen **6** für einen erhöhten Reibwert bei Berührung der Anlagefläche. Die Unterlegscheibe **1** bleibt gegenüber der Anlagefläche am zu befestigenden Bauteil stehen. Es wird dadurch vermieden, daß die Anlagefläche am Bauteil durch eine sich mit dem Befestigungselement **2** mitdrehende Scheibe **1** beschädigt und eine eventuell vorhandene Beschichtung zerstört wird, und blankes Metall in Berührung mit der Unterlegscheibe **1** gerät. Sind die Anlagefläche des zu verschraubenden Bauteils beispielsweise aus Aluminium und die Unterlegscheibe sowie das Befestigungselement aus Stahl, so ist der Reibbeiwert zwischen Stahl und Aluminium geringer als zwischen zwei Stahlbauteilen. Ein Mitdrehen der Scheibe **1** mit dem Befestigungselement **2** aus diesem Grunde kann durch die Ausklinkungen **6** wirksam verhindert werden.

Durch zunehmende Verspannung zwischen der Unterlegscheibe und der Anlagefläche während der Verschraubung werden die federnden Ausklinkungen **6** planiert. Die vollständige Anlagefläche zwischen der Scheibe und dem Bauteil kann ausgenutzt werden.

**Fig. 5** zeigt ein weiteres Ausführungsbeispiel der erfindungsgemäßen Unterlegscheibe **1**, bei der zusätzlich zu den Ausklinkungen **6** Ausstanzungen **7** vorgesehen sind.

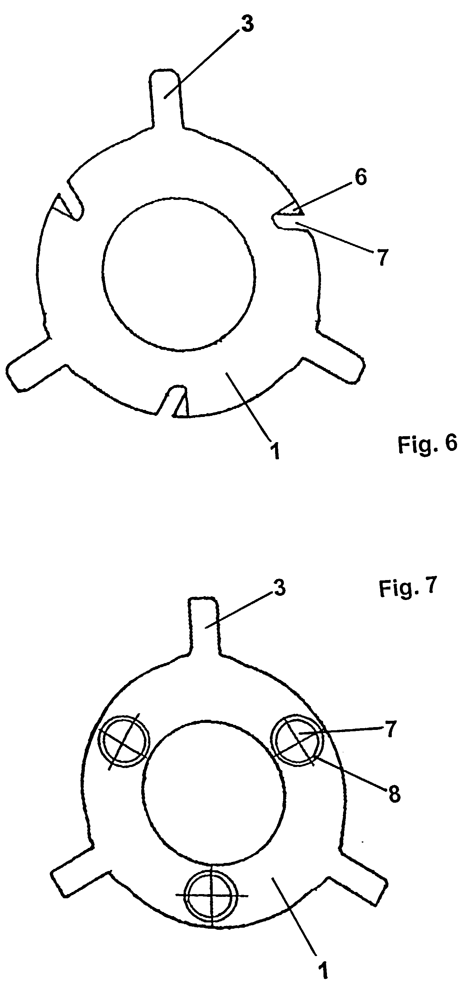

**Fig. 6** zeigt ein weiteres Ausführungsbeispiel der erfindungsgemäßen Unterlegscheibe **1**, bei dem die Ausklinkungen **6** zur Erhöhung des Reibwertes sägezahnförmig ausgeführt sind.

Das in **Fig. 7** dargestellte Ausführungsbeispiel der erfindungsgemäßen Scheibe **1** weist im Bereich der Unterlegscheibe Ausstanzungen **7** auf, die in diesem Beispiel kreisförmig sind. Umlaufend um die kreisförmige Ausstanzung entsteht ein Grat **8** in Stanzrichtung, der wie die Ausklinkungen **6** in den Figuren 4, 5 und 6 wirkt.

Die erfindungsgemäße Scheibe **1** ist leicht herstellbar, da eine Ausstanzung der Scheibe einschließlich Haltekrallen **3** möglich ist. Die Haltekrallen **3** können dann einfach um den Flansch **4** des Befestigungselementes **2** herumgelegt werden. Eine komplizierte Aufformung eines Ringstegs ist nicht mehr notwendig. Falls erforderlich kann die am Befestigungselement **2** befestigte Unterlegscheibe **1** leicht durch Aufbiegen der Haltekrallen **3** entfernt werden.

Ein weiterer entscheidender Vorteil der erfindungsgemäßen Scheibe **1** liegt darin, daß eine Beschichtung der Scheibe auch im montierten Zustand auf dem Befestigungselement **2** möglich ist, ohne daß Anhäufungen des Beschichtungsmediums an der Baugruppe haften bleiben. Es ist möglich, das Beschichtungsmedium abzuschleudern, während bei der nach dem Stand der Technik bekannten Ausführungsform mit vollständig umlaufendem Ringsteg immer Materialreste zwischen dem Flansch des Befestigungselements und dem Ringsteg verblieben, die nicht abgeschleudert werden können, ist dies bei der erfindungsgemäßen Scheibe nicht mehr der Fall.

Außerdem kann der äußere Biegeradius der Haltekrallen **3** kleiner als bei einem geschlossenem Ring gewählt werden, so daß bei gleichen Platzverhältnissen größere Anlagenflächen ermöglicht werden.

## Patentansprüche

1. Unterlegscheibe (1) zur Befestigung an einem Befestigungselement (2), insbesondere an einer Mutter oder an einem Schraubbolzen, **dadurch gekennzeichnet,** daß die Unterlegscheibe (1) mit mindestens zwei angeformten Haltekrallen (3) versehen ist, die um einen am Befestigungselement (2) angeordneten Flansch (4) umlegbar sind.

2. Unterlegscheibe (1) nach Anspruch 1, **dadurch gekennzeichnet,** daß die Haltekrallen (3) am äußeren Rand (5) angeformt sind.

3. Unterlegscheibe (1) nach Anspruch 1 oder 2, **dadurch gekennzeichnet,** daß der Biegebereich (9) der Haltekrallen (3) innerhalb des Scheibenradius liegt.

4. Unterlegscheibe (1) nach einem der Ansprüche 1 bis 3, **dadurch gekennzeichnet,** daß die Unterlegscheibe eine Ausklinkung (6) aufweist.

5. Unterlegscheibe nach Anspruch 4, **dadurch gekennzeichnet,** daß die Ausklinkung am inneren Umfang und/oder am äußeren Umfang angeordnet ist.

6. Unterlegscheibe (1) nach Anspruch 4 oder 5, **dadurch gekennzeichnet,** daß die Ausklinkung (6) rechteckig oder sägezahnförmig ist.

7. Unterlegscheibe (1) nach einem der Ansprüche 1 bis 6, **dadurch gekennzeichnet,** daß innerhalb der Scheibe eine Ausstanzung (7), insbesondere eine kreisförmige oder ovale Ausstanzung, vorgesehen ist.
